# EUROPEAN PATENT APPLICATION

(11) **EP 1 903 572 A2**
(43) Date of publication of application: **26.03.2008**
(21) Application number: 06125057.7
(22) Date of filing: 30.11.2006
(51) Int. Cl.: G11B 27/034

(54) **Method and system for fast format transformation**

(30) Priority: 20.09.2006 US 533388
(71) Applicant: MediaTek, Inc, Taiwan (TW)
(72) Inventor: Yen, Hsien-Chun, Tai-Chung Hsien (TW)
(74) Representative: Patentanwälte Kewitz & Kollegen

(57) **Abstract**

Methods for fast format transformation. When a data recording is implemented to generate multimedia data in a data format, it is determined whether the multimedia data in the data format is multimedia data in DVD+VR/DVD-VIDEO format. If the multimedia data in the data format is the multimedia data in DVD+VR/DVD-VIDEO format, extra space is added to a packet header of each of the first packet of each VOBU of the multimedia data in the data format. It is determined whether the last packet of each VOBU of the multimedia data in the data format is completed. If the last packet of each VOBU of the multimedia data in the data format is not completed, a padding packet is added to complete the last packet.

## Description

### BACKGROUND OF THE INVENTION

### Field of the Invention

The invention relates to data transformation, and in particular to a method for fast fonnat transformation applied to multimedia data for a digital versatile disk (DVD).

### Description of the Related Art

An elementary stream is a generic term for a sequence of coded video, coded audio, coded graphics or other access units that can be correctly decoded by a hypothetical decoder operating without special control from an external controller. The elementary stream is cut into packets to form a packetized elementary stream (PES). A PES starts with a header, followed by the content of the packet (payload) and the descriptor. Packetization provides protection and flexibility for transmitting multimedia streams across the different networks. In general, a PES can only contain the data from the same elementary stream.

MPEG-2 has two different multiplexing schemes, comprising the program stream and the transport stream.

The program stream is similar to MPEG-1 systems multiplexing. The program stream is derived from combining one or more packetized elementary streams, which have a common time base, into a single stream. The program stream is designed for use in relatively error-free environments and is suitable for applications that may involve software processing. Program stream packets may vary greatly in length.

The transport stream combines one or more packetized elementary streams with one or more independent time bases into a single stream. Elementary streams sharing a common timebase form a program. The transport stream is designed for use in environments where errors are likely, such as storage or transmission in lossy or noisy media. Transport stream packets are 188 bytes long.

A program stream is the most common method of storing MPEG video in a computer file. A typical DVD program stream contains four packetized elementary streams, comprising video, audio, sub-picture, and navigation. The navigation data stream contains the presentation control information (PCI), and data search information (DSI). A data stream can be as short as a few thousand bytes, as in the case of a sub-picture stream, or as long as many gigabytes as in the case of motion picture. Similar to CD-ROM media, a data stream is stored in an individual segment of a DVD disc called sector.

With respect to DVD processing, a dubbing operation copies a bit stream from a hard disk (HDD) to a DVD or from a DVD to an HDD. A change in recording format, generated according to disc type or disc format, may be required.

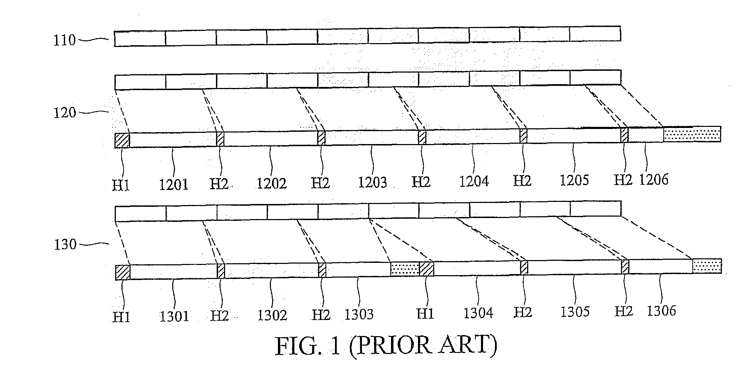

Fig. 1 is a schematic view of relationships between elementary streams and program streams, in which arrangement of payload of different formats varies.

Elementary stream 110 consists of a plurality of access units (i.e. a plurality of frames), multiplexed to form DVD+VR/DVD-Video stream 120 or DVD-VR stream 130. As shown in Fig. 1, one or more access units of elementary stream 110 can form a pack (a video pack or an audio pack). Each pack begins with a pack header and contains one packet or one packet plus one padding packet. Additionally, three packs form a video object unit (VOBU). As shown by DVD+VR/DVD-Video stream 120, packs 1201, 1202, and 1203 form a VOBU, packs 1204, 1205, and 1206 form another VOBU, and so forth. Similarly, as shown by DVD-VR stream 130, packs 1301, 1302, and 1303 form a VOBU, packs 1304, 1305, and 1306 form another VOBU, and so forth.

It is noted that a program stream may comprises multiple VOBUs (i.e. data streams), each composed of a navigation pack (NV_PCK), audio packs (A_PCK), video packs (V_PCK), and sub-picture packs (SP_PCK). Herein, one of different types of packs comprised in an elementary stream (such as an audio stream, a video stream, a sub-picture stream, or others) is described as an example, but is not to be limitative. Additionally, a frame length of a packet (or a frame) of a data stream is not fixed.

Note that the first packet of the first VOBU of a video object (VOB) of DVD+VR/DVD-Video stream 120 comprises a packet header with a longer length (represented by symbol H1), while the other packets of the VOBUs of the VOB of DVD+VR/DVD-Video stream 120 comprises a packet header with a shorter length (represented by symbol H2). Nevertheless, the first packet of each VOBU of a video object (VOB) of DVD-VR stream 130 comprises a packet header with a longer length (represented by symbol H1), while each of the other two packets of each VOBU of the VOB of DVD-VR stream 130 comprises a packet header with a shorter length (represented by symbol H2).

A difference is generated in packet header lengths between a packet header of a VOBU of DVD+VR/DVD-Video stream 120 and that of DVD-VR stream 130 because audio streams are completed in each VOB for DVD+VR/DVD-Video stream 120 as audio streams are completed in each VOBU for DVD-VR stream 130. Thus, a packet header of the first packet of a VOBU of DVD-VR stream 130 must be of a greater length for recording of more information.

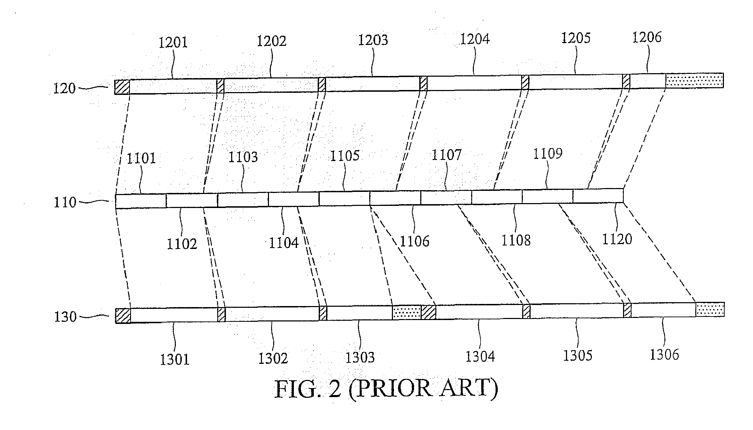

As described, access units 1101 ~ 1120 of elementary stream 110 can be multiplexed to form packets 1201~1206 of DVD+VR/DVD-Video stream 120 or packets 1301 ~ 1306 of DVD-VR stream 130, in which one more access units forms a packet (a video packet or an audio packet) . Each packet begins with a packet header and contains one or two packets. A VOBU is composed of a navigation pack and multiple video and audio packs. In this embodiment, a VOBU is composed of three packs (video or audio packs) to be an example for simplicity. When format transformation (re-multiplexing, indicating de-multiplexing and then multiplexing) is required, payload locations must be rearranged. As shown in Fig. 2, a data stream (such as an audio stream, a video stream, a sub-picture stream, or others) of a VOBU comprises three packs. When transformation of multimedia data in DVD+VR/DVD-Video format to multimedia data in DVD-VR format is required, header and data lengths of each VOBU packet of the multimedia data in DVD+VR/DVD-Video format must be symmetrized to that of the multimedia data in DVD+VR/DVD-Video format. Access units 1101 - 1105 can form packets 1201~1203 or packets 1301 ~ 1303, in which a portion of access unit 1106 is comprised in packet 1203, and a portion of packet 1303 is unpadded. If complete transformation of packet 1303 is required to packet 1203 is required, the payload of packet 1303 must be rearranged to fill empty space with a padding packet. Such transformation is time-consuming and inconvenient.

Thus, the invention provides a method for fast format transformation, reserving extra space for format transformation without re-multiplexing.

### BRIEF SUMMARY OF THE INVENTION

Methods for fast format transformation are provided. An exemplary embodiment of a method for fast format transformation comprises the following. When a data recording is implemented to generate multimedia data in a data format, it is determined whether the multimedia data in the data format is multimedia data in DVD+VR/DVD-VIDEO format. If the multimedia data in the data format is the multimedia data in DVD+VR/DVD-VIDEO format, extra space is added to a packet header of each first packet of each VOBU of the multimedia data in the data format. It is determined whether the last packet of each VOBU of the multimedia data in the data format is completed. If the last packet of each VOBU of the multimedia data in the data format is not completed, a padding packet is added to complete the last packet.

Another embodiment of a method for fast format transformation comprises the following. When transformation of multimedia data in a first format to multimedia data in a second format is required, it is determined whether the multimedia data in the first format is multimedia data in the DVD+VR/DVD-VIDEO or DVD-VR format. If the multimedia data in the first format is multimedia data in DVD+VR/DVD-VIDEO format, a pre-added extra space of the first packet of each VOBU of the multimedia data in the first format serves as a PES extension field of the first packet of each VOBU of the multimedia data in the second format. It is determined whether the last packet of each VOBU of the multimedia data in the first format is completed. If the last packet of each VOBU of the multimedia data in the first format is not completed, a padding packet is added to complete the last packet, and the multimedia data in the first format is transformed to the multimedia data in the second format.

Further, if the multimedia data in the first format is multimedia data in DVD-VR format, a PES extension field of the first packet of each VOBU of the multimedia data in the first format serves as a predefined stuffing field. It is determined whether the last packet of each VOBU of the multimedia data in the first format is completed. If the last packet of each VOBU of the multimedia data in the first format is not completed, a padding packet is added to complete the last packet, and the multimedia data in the first format is transformed to the multimedia data in the second format.

Another exemplary embodiment of a method for fast format transformation is applied to a multimedia data format comprising a packet. The packet comprises a header and a packet, which is a video packet, an audio packet, or a sub video packet.. The packet comprises a header, comprising stuffing data for format compatibility, and a payload. The packet is a first packet of a VOBU and the VOBU comprises at least one completed stream and a plurality of packets.

Another exemplary embodiment of a method for fast format transformation is applied to a multimedia data format comprising a packet. The packet comprises a header and a packet, which is a video packet, an audio packet, or a sub video packet. The packet comprises a packet header, a payload, and a padding packet for format compatibility. The packet is a first packet within a VOBU and the VOBU comprising at least one completed stream and a plurality of packets.

Systems for fast format transformation are provided. An exemplary embodiment of a system for fast format transformation comprises a format determination unit, an adding unit, and a processing unit. When a data recording is implemented to generate multimedia data in a data format, the format determination unit determines whether the multimedia data in the data format is multimedia data in DVD+VR/DVD-VIDEO format. If the multimedia data in the data format is the multimedia data in DVD+VR/DVD-VIDEO format, the adding unit adds extra space to a packet header of each first packet of each VOBU of the multimedia data in the data format. The processing unit determines whether the last packet of each VOBU of the multimedia data in the data format is completed. If the last packet of each VOBU of the multimedia data in the data format is not completed, the adding unit adds a padding packet to complete the last packet.

Another exemplary embodiment of a system for fast format transformation comprises a format determination unit, an adding unit, a processing unit, and a format transformation unit. When transformation of multimedia data in a first format to multimedia data in a second format is required, the format determination unit determines whether the multimedia data in the first format is multimedia data in the DVD+VR/DVD-VIDEO or DVD-VR format. If the multimedia data in the first format is multimedia data in DVD+VR/DVD-VIDEO format, the processing unit directs a pre-added extra space of the first packet of each VOBU of the multimedia data in the first format to serve as a PES extension field of the first packet of each VOBU of the multimedia data in the second format, and determines whether the last packet of each VOBU of the multimedia data in the first format is completed. If the last packet of each VOBU of the multimedia data in the first fonnat is not completed, the adding unit adds a padding packet to complete the last packet. The format transformation unit transforms the multimedia data in the first format to the multimedia data in the second format.

Further, the processing unit directs a PES extension field of the first packet of each VOBU of the multimedia data in the first format to serve as a predefined stuffing field if the multimedia data in the first format is multimedia data in DVD-VR format and determines whether the last packet of each VOBU of the multimedia data in the first format is completed. The adding unit adds a padding packet to complete the last packet if the last packet of each VOBU of the multimedia data in the first format is not completed. The format transformation unit transforms the multimedia data in the first format to the multimedia data in the second format.

A detailed description is given in the following embodiments with reference to the accompanying drawings.

### BRIEF DESCRIPTION OF THE DRAWINGS

The invention can be more fully understood by reading the subsequent detailed description and examples with references made to the accompanying drawings, wherein:

Fig. 1 is a schematic view of relationships between elementary streams and program streams;

Fig. 2 is a schematic view of format transformation by rearranging locations of payload;

Fig. 3 is a schematic view of format transformation without rearranging locations of payload;

Fig. 4A is a schematic view of the structure of an RDI packet;

Fig. 4B is a schematic view of the structure of a NV packet;

Fig. 5 is a schematic view of an embodiment of packet field adjustment;

Fig. 6 is a flowchart of an embodiment of a method for fast format transformation, in which extra space is added to a header packet;

Fig. 7 is a flowchart of an embodiment of a method for fast format transformation, in which multimedia data in a first format is transformed to multimedia data in a second format; and

Fig. 8 is a schematic view of an embodiment of a system for fast format transformation.

### DETAILED DESCRIPTION OF THE INVENTION

Several exemplary embodiments of the invention are described with reference to Figs. 1 through 8, which generally relate to fast format transformation for multimedia data. It is to be understood that the following disclosure provides various different embodiments as examples for implementing different features of the invention. Specific examples of components and arrangements are described in the following to simplify the present disclosure. These are, of course, merely examples and are not intended to be limiting. In addition, the present disclosure may repeat reference numerals and/or letters in the various examples. This repetition is for the purpose of simplicity and clarity and does not in itself dictate a relationship between the various described embodiments and/or configurations.

The invention discloses a method for fast format transformation for multimedia data recorded in a storage medium. The storage medium can be an electrically programmable and erasable disk, such as a flash memory.

As described, a conventional format transformation requires rearrangement of packet payload. The invention reserves extra space in a packet for format transformation, such that need for packet payload rearrangement is eliminated.

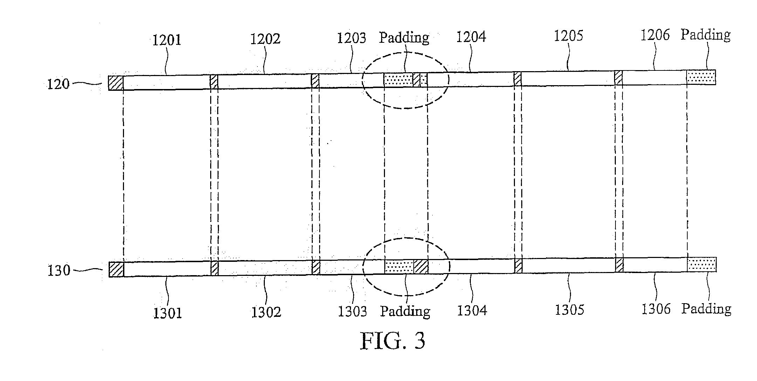

Referring to Fig. 3, packet 1203 is not completed filled with multimedia data, thus the empty space must be filled with a padding packet to complete packet 1203, as well as packets 1206, 1303, and 1306. Additionally, packet header 1204 is shorter than packet header 1304. To symmetrize packet 1204 and packet 1304, a padding packet must be added to packet header 1204 to equalize the lengths of packet headers 1204 and 1304. Further, if a packet cannot be completely filled with a multimedia packet, a padding packet of appropriate size added to complete the packet.

The difference between DVD+VR and DVD-VR format data is described in the following.

DVD+VR format data comprises a navigation pack (NV_PCK) and audio streams thereof are completed in each VOB. Additionally, PES extension fields are described only for the first video pack (V_PCK) (or the first audio pack (A_PCK) or sub-picture pack (SP_PCK) in each VOB.

DVD-VR format data comprises a real-time data information pack (RDI_PCK) and audio streams thereof are completed in each VOBU. Additionally, PES extension fields are described for the first video packet in each VOBU.

The definition of "Completed" indicates the beginning of each stream starts from the first data of each access unit and the end of each stream is aligned in each access unit. Thus, when a packet length comprising the last data in each stream is less than 2048 bytes, the packet length must be adjusted to equal to 2048 bytes.

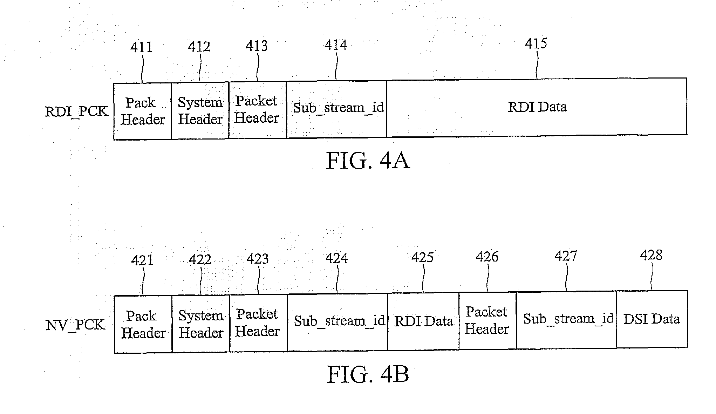

Further, referring to Fig. 4A, the structure of an RDI packet comprises a packet header 411, a system header 412, a packet header 413, a sub stream id 414, and RDI data 415. Referring to Fig. 4B, the structure of an NV packet comprises a packet header 421, a system header 422, a packet header 423, a sub stream id 424, PCI data 425, a packet header 426, a sub stream id 427, and RDI data 428. Packet header 423, sub stream id 424, and PCI data 425 consist of a PCI packet while packet header 426, sub stream id 427, and RDI data 428 consist of a DCI packet. In this embodiment, extra space is added to packet header 421 and a padding packet may be added after DSI data 428 to complete the last packet of a VOBU, thus resulting in compatible transformation between DVD-VR and DVD+VR format streams.

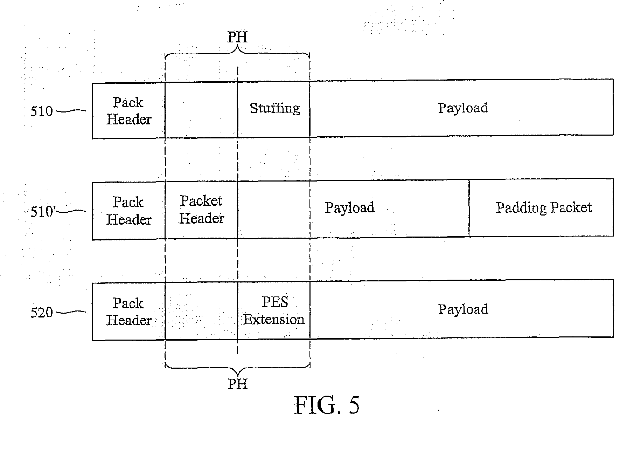

Fig. 5 is a schematic view of an embodiment of packet field adjustment.

Packet 510 is a DVD+VR compatible packet, comprising a packet header, a packet header, and payload. In this embodiment, a stuffing field is added to the packet header 510 to equalize the packet length of a packet header 520, a DVD-VR compatible packet. The stuffing field can be 3 or more bytes. Additionally, the packet header 520 comprises a PES extension field with a PES extension field flag. A flag of he PES extension field of the first packet of the first VOBU of a VOB can be set to a false state to erase packet data. Flags of PES extension fields of the first packet of each first VOBU, excluding the first packet of the VOB should not be set to false states. As described, when transformation of a DVD+VR format packet to a DVD-VR format packet is required, the stuffing field serves as the PES extension field, thus the DVD+VR format packet can be correctly transformed to the DVD-VR format packet. Alternatively, when transformation of a DVD-VR format packet to a DVD+VR format packet is required, the PES extension field is emptied to serve as the stuffing field, thus the DVD-VR format packet can be correctly transformed to the DVD+VR format packet.

Note that when the number of stuffing bytes is grater than 8 bytes, the stuffing field is not added to packet header 510 but a padding packet is added after the payload field, as shown by packet 510'.

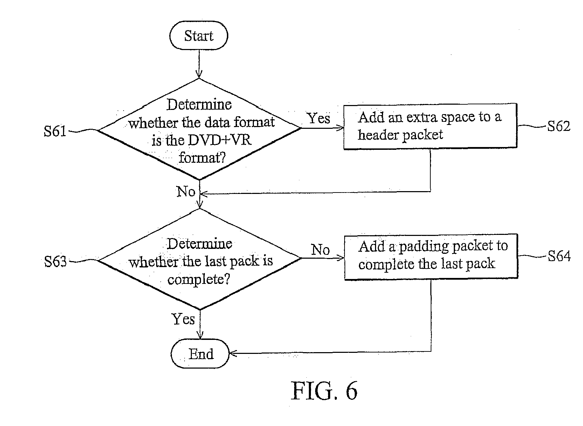

Fig. 6 is a flowchart of an embodiment of a method for fast format transformation, in which extra space is added to a packet header.

When a data recording is implemented to generate multimedia data in a data format, (i.e. generating a DVD+VR/DVD-VIDEO or DVD-VR stream using an elementary stream), it is determined whether the multimedia data in the particular data format is DVD+VR/DVD-VIDEO format (step S61). If the multimedia data in the particular data format is not DVD+VR/DVD-VIDEO, the process concludes. If the multimedia data in the particular data format is DVD+VR/DVD-VIDEO, extra space (such as a stuffing field) is added to a packet header of each of the first packets of each VOBU of the multimedia data in the particular data format (step S62). Next, it is determined whether the last packet of each VOBU of the multimedia data in the particular data format is completed (step S63). If the last packet of each VOBU of the multimedia data in the particular data format is completed, the process concludes. If the last packet of each VOBU of the multimedia data in the particular data format is not completed, a padding packet is added to complete the last packet (step S64).

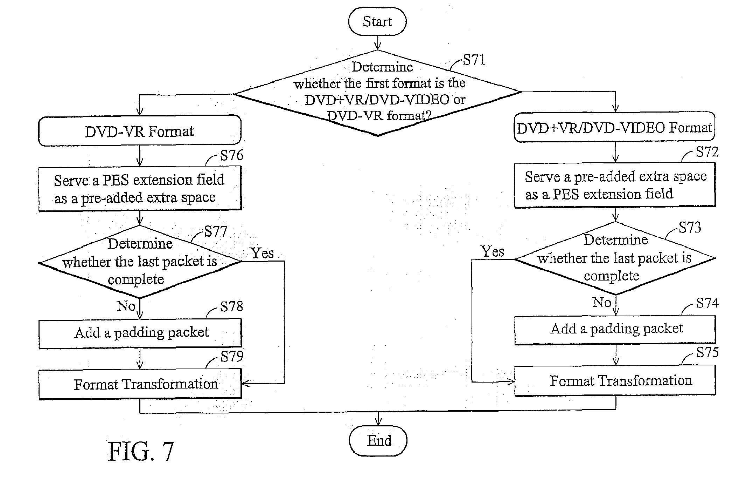

Fig. 7 is a flowchart of an embodiment of a method for fast format transformation, in which multimedia data in a first format is transformed to multimedia data in a second format.

When transformation of multimedia data in a first format to multimedia data in a second format is required, it is determined whether the multimedia data in the first format is multimedia data in the DVD+VR/DVD-VIDEO or DVD-VR format (step S71). If the multimedia data in the first format is multimedia data in DVD+VR/DVD-VIDEO format, a pre-added extra space of the first packet of each VOBU of the multimedia data in the first format serves as a PES extension field of the first packet of each VOBU of the multimedia data in the second format (the DVD-VR format) (step S72). Next, it is determined whether the last packet of each VOBU of the multimedia data in the first format is completed (step S73). If the last packet of each VOBU of the multimedia data in the first format is not completed, a padding packet is added to complete the last packet (step S74), and the multimedia data in the first format can be correctly transformed to the multimedia data in the second format (the DVD-VR format) (step S75). If the last packet of each VOBU of the multimedia data in the first format is completed, the multimedia data in the first format can be correctly transformed to the multimedia data in the second format (the DVD-VR format) without adding a padding packet.

If the multimedia data in the first format is multimedia data in DVD-VR format, a PES extension field of the first packet of each VOBU of the multimedia data in the first format serves as a predefined stuffing field (step S76). Next, it is determined whether the last packet of each VOBU of the multimedia data in the first format is completed (step S77). If the last packet of each VOBU of the multimedia data in the first format is not completed, a padding packet is added to complete the last packet (step S78), and the multimedia data in the first format can be correctly transformed to the multimedia data in the second format (the DVD+VR/DVD-VIDEO format) (step S79). If the last packet of each VOBU of the multimedia data in the first format is completed, the multimedia data in the first format can be correctly transformed to the multimedia data in the second format (the DVD+VR/DVD-VIDEO format) without adding a padding packet.

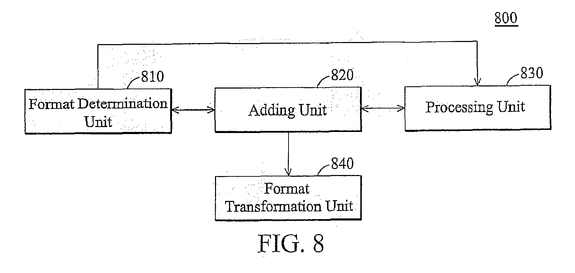

Fig. 8 is a schematic view of an embodiment of a system for fast format transformation.

A fast format transformation system 800 comprises a format determination unit 810, an adding unit 820, a processing unit 830, and a format transformation unit 840. When a data recording is implemented to generate multimedia data in a first format, (i.e. generating a DVD+VR/DVD-VIDEO or DVD-VR streams using an elementary stream), format determination unit 810 determines whether the multimedia data in the first format is multimedia data in DVD+VR/DVD-VIDEO format. If the multimedia data in the first format is the multimedia data in DVD+VR/DVD-VIDEO format, adding unit 820 adds extra space (such as a stuffing field) to a packet header of each of the first packet of each VOBU of the multimedia data in the first format. Next, processing unit 830 determines whether the last packet of each VOBU of the multimedia data in the first format is completed. If the last packet of each VOBU of the multimedia data in the first format is not completed, adding unit 820 adds a padding packet to complete the last packet.

Further, when transformation of multimedia data in a first format to multimedia data in a second format is required, format determination unit 810 determines whether the multimedia data in the first format is multimedia data in the DVD+VR/DVD-VIDEO or DVD-VR format. If the multimedia data in the first format is multimedia data in DVD+VR/DVD-VIDEO format, processing unit 830 directs a pre-added extra space of the first packet of each VOBU of the multimedia data in the first format to serve as a PES extension field of the first packet of each VOBU of the multimedia data in the second format (the DVD-VR format). Format processing unit 830 then determines whether the last packet of each VOBU of the multimedia data in the first format is completed. If the last packet of each VOBU of the multimedia data in the first format is not completed, adding unit 820 adds a padding packet to complete the last packet, and format transformation unit 840 transforms the multimedia data in the first format to the multimedia data in the second format (the DVD-VR fonnat). If the last packet of each VOBU of the multimedia data in the first format is completed, format transformation unit 840 transforms the multimedia data in the first format to the multimedia data in the second format (the DVD-VR format) without adding a padding packet.

Next, if the multimedia data in the first format is multimedia data in DVD-VR format, processing unit 830 directs a PES extension field of the first packet of each VOBU of the multimedia data in the first format to serve as a predefined stuffing field. Processing unit 830 then determines whether the last packet of each VOBU of the multimedia data in the first format is completed. If the last packet of each VOBU of the multimedia data in the first format is not completed, adding unit 820 adds a padding packet to complete the last packet, and format transformation unit 840 transforms the multimedia data in the first format to the multimedia data in the second format (the DVD+VR/DVD-VIDEO format). If the last packet of each VOBU of the multimedia data in the first format is completed, format transformation unit 840 transforms the multimedia data in the first format to the multimedia data in the second format (the DVD+VR/DVD-VIDEO format) without adding a padding packet.

The inventive methods and systems for fast format transformation reserve extra space and add a padding packet when needed to transform formats without re-multiplexing or rearranging payload data positions.

While the invention has been described by way of example and in terms of the preferred embodiments, it is to be understood that the invention is not limited to the disclosed embodiments. To the contrary, it is intended to cover various modifications and similar arrangements (as would be apparent to those skilled in the art). Therefore, the scope of the appended claims should be accorded the broadest interpretation so as to encompass all such modifications and similar arrangements.

## Claims

1. A method for fast format transformation, applied to a multimedia data format comprising a packet, the packet comprising:
a packet header; and
a packet, which is a video packet, an audio packet, or a sub video packet, comprising:
a packet header comprising stuffing data for format compatibility; and
a payload,
wherein the packet is a first packet within a VOBU and the VOBU comprises at least one completed stream and a plurality of packets.

2. The method for fast format transformation as claimed in claim 1, wherein the multimedia data is recorded in an optical disk.

3. The method for fast format transformation as claimed in claim 1, wherein the multimedia data is recorded in a magnetic disk.

4. The method for fast format transformation as claimed in claim 1, wherein the multimedia data is recorded in an electrically programmable and erasable disk.

5. The method for fast format transformation as claimed in any of claims 1 to 4, wherein the multimedia data format is compatible in DVD+VR/-VIDEO format.

6. A method for fast format transformation, applied to a multimedia data format comprising a packet, the packet comprising:
a packet header; and
a packet, which is one of video packet, audio packet, and sub video packet, comprising:
a packet header;
a payload; and
a padding packet for format compatibility,
wherein the packet is a first packet within a VOBU and the VOBU comprises at least one completed stream and a plurality of packets.

7. The method for fast format transformation as claimed in claim 6, wherein the multimedia data is recorded in an optical disk.

8. The method for fast format transformation as claimed in claim 6, wherein the multimedia data is recorded in a magnetic disk.

9. The method for fast format transformation as claimed in claim 6, wherein the multimedia data is recorded in an electrically programmable and erasable disk.

10. The method for fast format transformation as claimed in any of claims 6 to 9, wherein the multimedia data format is compatible in the DVD-VR format.

11. A method for fast format transformation for recording a multimedia data format, wherein the multimedia data format comprises a packet and the packet comprises a packet header and at least one packet, comprising
stuffing data in a packet header of the packet to generate a second packet header,
wherein the packet is a first packet within a VOBU and the VOBU comprises at least one completed stream and a plurality of packets.

12. The method for fast format transformation as claimed in claim 11, wherein the size of the stuffed data is 3 bytes.

13. The method for fast format transformation as claimed in claim 11 or 12, wherein at least one audio stream is completed in the VOBU.

14. The method for fast format transformation as claimed in any of claims 11 to 13, wherein the multimedia data format is compatible in the DVD+VR/-VIDEO format.

15. A method for fast format transformation for transforming a multimedia data format, wherein the multimedia data format comprises a packet and the packet comprises a packet header and at least one packet, comprising
setting a PES extension flag in a packet header of the packet to a false state.

16. The method for fast format transformation as claimed in claim 15, further comprising erasing PES header data.

17. The method for fast format transformation as claimed in claim 15 or 16, wherein the multimedia data format is compatible in the DVD-VR format.

18. A method for fast format transformation for transforming a multimedia data format, wherein the multimedia data format comprises a packet and the packet comprises a packet header and at least one packet, comprising
setting a PES extension flag in a packet header of the packet to a true state.

19. The method for fast format transformation as claimed in claim 18, further comprising replacing PES header data.

20. The method for fast format transformation as claimed in claim 18 or 19, wherein the multimedia data format is compatible in the DVD+VR/-VIDEO format.

21. A method for fast format transformation, comprising:
when a data recording is implemented to generate multimedia data in a data format, determining whether the multimedia data in the data format is multimedia data in DVD+VR/DVD-VIDEO format;
if the multimedia data in the data format is the multimedia data in DVD+VR/DVD-VIDEO format, adding extra space to a packet header of each first packet of each VOBU of the multimedia data in the data format;
determining whether the last packet of each VOBU of the multimedia data in the data format is completed; and
if the last packet of each VOBU of the multimedia data in the data format is not completed, adding a padding packet to complete the last packet.

22. The method for fast format transformation as claimed in claim 21, wherein the extra space serves as a stuffing field.

23. The method for fast format transformation as claimed in claim 21 or 22, wherein the data format is a DVD+VR/DVD-VIDEO format.

24. A method for fast format transformation, comprising:
when transformation of multimedia data in a first format to multimedia data in a second format is required, determining whether the multimedia data in the first format is multimedia data in the DVD+VR/DVD-VIDEO or DVD-VR format;
if the multimedia data in the first format is multimedia data in DVD+VR/DVD-VIDEO format, directing a pre-added extra space of the first packet of each VOBU of the multimedia data in the first format to serve as a PES extension field of the first packet of each VOBU of the multimedia data in the second format;
determining whether the last packet of each VOBU of the multimedia data in the first format is completed;
if the last packet of each VOBU of the multimedia data in the first format is not completed, adding a padding packet to complete the last packet; and
transforming the multimedia data in the first format to the multimedia data in the second format.

25. The method for fast format transformation as claimed in claim 24, further comprising, if the last packet of each VOBU of the multimedia data in the first format is completed, transforming the multimedia data in the first format to the multimedia data in the second format without adding a padding packet.

26. The method for fast format transformation as claimed in claim 24 or 25, further comprising:
if the multimedia data in the first format is multimedia data in DVD-VR format, directing a PES extension field of the first packet of each VOBU of the multimedia data in the first format to serve as a predefined stuffing field;
determining whether the last packet of each VOBU of the multimedia data in the first format is completed;
if the last packet of each VOBU of the multimedia data in the first format is not completed, adding a padding packet to complete the last packet; and
transforming the multimedia data in the first format to the multimedia data in the second format.

27. The method for fast format transformation as claimed in claim 26, further comprising, if the last packet of each VOBU of the multimedia data in the first format is completed, transforming the multimedia data in the first format can be correctly to the multimedia data in the second format without adding a padding packet.

28. A system for fast format transformation, comprising:
a format determination unit, when a data recording is implemented to generate multimedia data in a data format, determining whether the multimedia data in the data format is multimedia data in DVD+VR/DVD-VIDEO format;
an adding unit, coupled to the format determination unit, if the multimedia data in the data format is the multimedia data in DVD+VR/DVD-VIDEO format, adding extra space to a packet header of each first packet of each VOBU of the multimedia data in the data format; and
a processing unit, coupled to the adding unit, determining whether the last packet of each VOBU of the multimedia data in the data format is completed;
wherein the adding unit adds a padding packet to complete the last packet if the last packet of each VOBU of the multimedia data in the data fonnat is not completed.

29. The system for fast format transformation as claimed in claim 28, wherein the extra space serves as a stuffing field.

30. The system for fast format transformation as claimed in claim 28 or 29, wherein the data format is a DVD+VR/DVD-VIDEO format.

31. A system for fast format transformation, comprising:
a format determination unit, when transformation of multimedia data in a first format to multimedia data in a second format is required, determining whether the multimedia data in the first format is multimedia data in the DVD+VR/DVD-VIDEO or DVD-VR format;
a processing unit, coupled to the format determination unit, if the multimedia data in the first format is multimedia data in DVD+VR/DVD-VIDEO format, directing a pre-added extra space of the first packet of each VOBU of the multimedia data in the first fonnat to serve as a PES extension field of the first packet of each VOBU of the multimedia data in the second format, and determining whether the last packet of each VOBU of the multimedia data in the first format is completed;
an adding unit, coupled to the format determination unit and the processing unit, if the last packet of each VOBU of the multimedia data in the first format is not completed, adding a padding packet to complete the last packet; and
a format transformation unit, coupled to the adding unit, coupled to the adding unit, transforming the multimedia data in the first format to the multimedia data in the second format.

32. The system for fast format transformation as claimed in claim 31, wherein the format transformation unit transforms the multimedia data in the first format to the multimedia data in the second format without adding a padding packet if the last packet of each VOBU of the multimedia data in the first format is completed.

33. The system for fast format transformation as claimed in claim 31 or 32, wherein:
the processing unit directs a PES extension field of the first packet of each VOBU of the multimedia data in the first format to serve as a predefined stuffing field if the multimedia data in the first format is multimedia data in DVD-VR format and determines whether the last packet of each VOBU of the multimedia data in the first format is completed;
the adding unit adds a padding packet to complete the last packet if the last packet of each VOBU of the multimedia data in the first format is not completed; and
the format transformation unit transforms the multimedia data in the first format to the multimedia data in the second format.

34. The system for fast format transformation as claimed in claim 33, wherein the format transformation unit transforms the multimedia data in the first format can be correctly to the multimedia data in the second format without adding a padding packet if the last packet of each VOBU of the multimedia data in the first format is completed.
